# EUROPEAN PATENT APPLICATION

(11) **EP 1 067 306 A1**
(43) Date of publication of application: **10.01.2001**
(21) Application number: 99830435.6
(22) Date of filing: 07.07.1999
(51) Int. Cl.: F16D 65/097

(54) **Elastic support for disc brake pad**

(71) Applicant: Freni Brembo S.p.A., 24035 Curno, Bergamo (IT)
(72) Inventor: Ciotti, Alessandro, 24036 Ponte San Pietro- Bergamo (IT); Agostini, Johannes, 24030 Mozzo-Bergamo (IT)
(74) Representative: Perani, Aurelio

(57) **Abstract**

An unusually quiet-running disc brake (1) comprises a caliper (4) straddling a disc (2) of defined axis (X-X), seats (8) in the caliper (4), at least one pad (9, 10) for each seat (8) and having a backing plate (11, 12) for a friction lining (11a, 12a), this pad being mounted in the seat (8), and a bearing surface (15, 16, 22, 23, 28, 29) in the caliper (4) to retain the pad (9, 10) tangentially relative to the disc (2) during braking, fitted with an elastically compliant striker (17).

## Description

The present invention relates to a disc brake.

A known type of disc brake basically comprises a caliper straddling a disc of defined axis, seats in the caliper, at least one pad for each seat and having a backing plate for a friction lining, this pad being mounted in the seat, and a bearing surface in the caliper to retain the pad tangentially relative to the disc during braking.

As is known, in disc brakes, the pads, when pressed against the disc during braking, are pushed by the disc itself with a force directed tangentially to the disc, which force it is obviously necessary to resist in order to obtain the desired retarding action.

For this reason the pads are brought up against bearing surfaces located in the caliper which react against the said tangential forces.

In known disc brakes, the wall of the seat in which the pads are mounted serves as this bearing surface, it being this wall that the backing plate of the pad strikes during braking.

The vibrations can develop in the disc brake during this braking action. These disc brake vibrations are heard as squealing which in itself is disagreeable.

The problem addressed by the present invention is how to provide a disc brake having structural and functional characteristics such as to overcome the abovementioned disadvantages cited with reference to the prior art.

This problem is solved by means of a disc brake of the type specified above, characterized in that the bearing surface for the pad comprises an elastically compliant striker.

In order to explain the invention more clearly a non-restrictive illustrative embodiment thereof will now be described and illustrated in the attached drawings, in which:
Figure 1 is a partially sectioned diagrammatic top view of a disc brake;
Figure 2 is a partially sectioned diagrammatic side view of the disc brake of Figure 1;
Figures 3 to 5 are sectional views of a detail of the disc brake of Figure 1;
Figures 6 to 8 are partially sectioned side views of a detail of the disc brake of Figure 1;
Figures 9 to 16 are corresponding side views in cross section of the same detail as in Figures 3 to 8, in a variant; and
Figure 17 is a sectional view of the same detail as in Figures 3 to 16, in a second variant.

With reference to the abovementioned figures, the number 1 is a general reference for a brake disc that is particularly suited to a high-performance vehicle. The disc brake comprises a disc 2 having an annular friction track 3 of axis X-X.

The disc brake 1 also comprises a caliper body 4 which straddles the friction track 3 of the disc 2.

When the vehicle is travelling forwards, the friction track 3 moves through the body of the caliper 4 in a direction V1. When reversing, however, the track 3 moves in a direction marked V2, the opposite of V1.

The body of the caliper 4 is made up of two caliper halves 5 and 6 made of a suitable cast aluminium alloy, the half calipers being juxtaposed on a plane perpendicular to the axis X-X, and being fastened to each other by four screws 7.

Seats 8 are formed in the body 4 to take pads 9, 10 located on opposite sides of the track 3.

The pads 9, 10 each comprise a steel backing plate 11, 12 and a friction lining 11a and 12a made of a material with a high coefficient of friction, the linings 11a and 12a being firmly supported by the said backing plates 11, 12, and being directly in contact with the surfaces of the friction track 3 during braking.

To make sure that the pads 9 and 10 cannot be lost, there are conventional securing means 13 comprising fins running through slotted holes formed in the backing plates.

Two opposite pairs of hydraulic cylinders 14 mounted in the caliper halves 5, 6 are active during the braking action in order to press the pads 9, 10 against their respective surfaces of the friction track 3.

When the brake is applied during forward travel the friction track 3 exerts on the pads 9 and 10 a force, directed tangentially to the disc, in the direction of arrow V1. In order to restrain the pad 9 (10) the disc brake 1 contains, in the said body of the caliper 4, bearing surfaces 22 and 28 (23 and 29) adjacent to each other and acting together to react against the said force.

On the other hand, to restrain the pad 9 (10) when the brake is applied while reversing, which subjects the pads to a force in the direction of arrow V2, the disc brake 1 contains a bearing surface 15 (16).

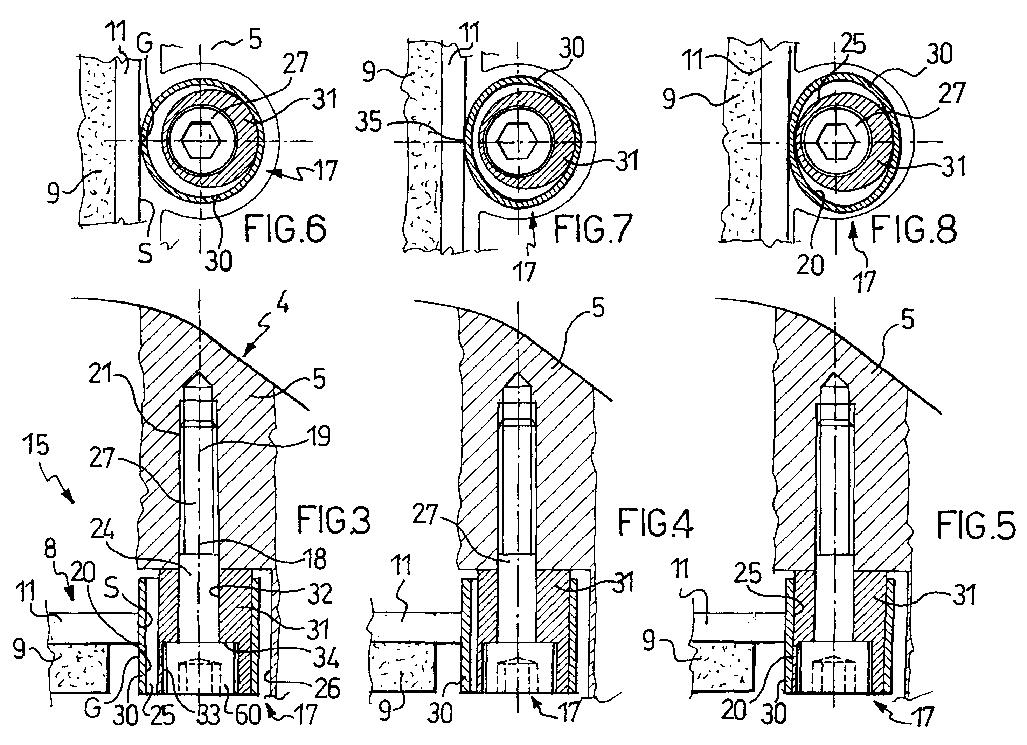

The bearing surfaces 22, 28, 23, 29, 15 and 16 are identical with each other, so only one of them will be described below in detail, with particular reference to Figures 3 to 8.

The bearing surface 15 comprises an elastically compliant striker 17 whose axis Y-Y is parallel to the axis X-X, the said striker 17 being fixed to the caliper half 5 in such a way that at least part of it projects into the seat 8 where it has a surface, or a generatrix G contacted by the backing plate 11 of the pad 9, and more specifically by the flat surface S of its lateral edge. It should be observed that the length of the striker 17 should be equal to or greater than the thickness of the pad, including, that is, the thickness of the backing plate plus that of the friction lining and, in particular, sufficient to brush the surface of the disc. In this way the stop remains functional until both the friction lining lla and the disc 2 are worn away.

The striker 17 comprises an elastically deformable cylindrical metal ring 30 or elastic bumper. The ring 30 is accommodated loosely in a cylindrical half-seat 26 let into the wall of the seat 8. In other words the outer surface of the ring 30 is not in contact with the wall of the half-seat 26. The ring 30 is arranged so that its axis is superimposed on the direction Y-Y.

The said ring 30 accommodates a steel bush 31 whose transverse dimension, or diameter, is less than the inside diameter of the ring 30. The ring 30 is attached internally to the bush 31 along a generatrix in such a way that it protrudes, in the manner of a bumper or a leaf spring, towards the flat surface S of the backing plate 11. For example, the ring 30 is brazed to the bush 31. When the ring 30 is in the rest position, or in a position without applied force from the pad 9, the remaining internal cylindrical surface 20 is in front of and not in contact with the surface 25 of the outer skirt of the bush 31. The bush 31 contains a through hole 32 and a cylindrical seat 33 coaxial with the hole 32. The said cylindrical seat 33 forms an annular shoulder surface 34. The hole 32 is situated eccentrically relative to the axis of the bush 31, e.g. is superimposed on the axis of the ring 30. The said hole 32 can accommodate in a guided manner a cylindrical section 24 of a pin, e.g. a section of the shank 18 of a screw 27. The head 60 of this screw 27 is cylindrical and contains a hexagonal seat 17a by which it can be driven. The head 60 is received inside the seat 33 of the bush 31 and abuts against the shoulder 34. A section of threaded shank 19 of the screw 27 extends beyond the bush 31 and is screwed into a tapped hole 21 formed in the half 5 of the caliper 4, to secure the striker firmly against the said caliper half 5.

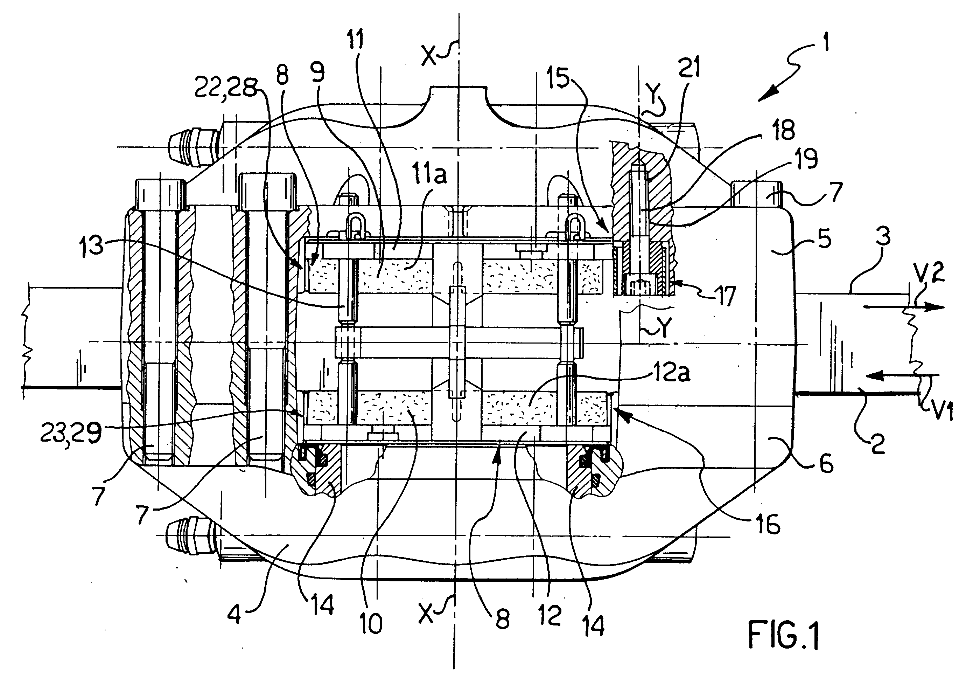

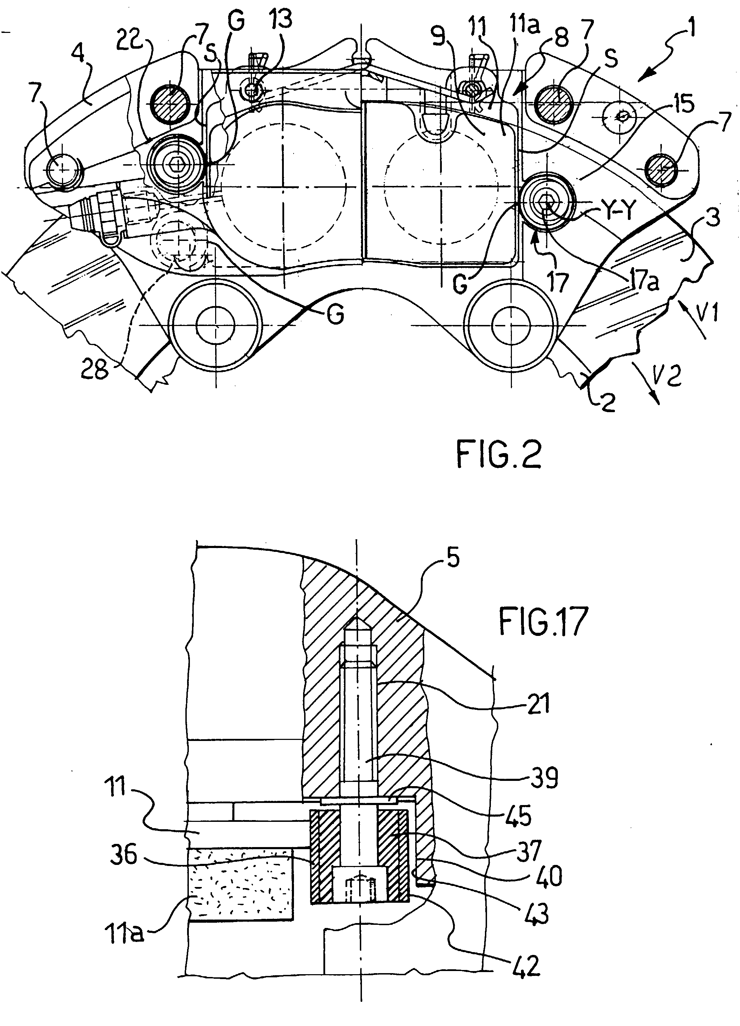

The operation of the disc brake is described below with reference to Figures 1 to 8.

The elastically compliant striker 17 of each bearing surface 15 of the pad 9 is mounted in its respective caliper 4 half 5, inserting the ring 30 attached to the bush into the cylindrical half-seat 26 in such a way that the protruding part of the ring 30 is towards the flat surface S of the backing plate 11. The elastically compliant striker 17 is centred on the half-seat 26 accommodating in the hole 32 the cylindrical section 24 of the screw 27 screwed into the hole 21 of the caliper 4 half 5. Before the eccentric bush 31 is tightened down against the caliper half 5, it is possible to turn the bush 31 and hence the ring 30 so as to set it at the appropriate angle about the axis Y-Y of the screw 27. The elastically compliant striker 17 can therefore be calibrated by varying the distance between the inside surface 20 of the section of the ring 30 in contact with the pad 9 and the adjacent outside stop surface 25 of the bush 31. When the elastically compliant striker 17 is in the desired angular position, the bush is secured firmly against the caliper 4 half 5, moving the head 60 of the screw 27 down against the annular surface of the shoulder 34.

During braking the pad 9 pressed against the disc 2 is moved so that the flat lateral surface S of the backing plate 11 contacts the generatrix G of the ring 30 (Figures 3 and 6). As the braking force rises, the pad 9 elastically deforms the ring 30, gradually increasing the area of contact 35 between the surface S of the backing plate 11 and the outside surface of the ring 30. The gradual increase in the area of contact 35 between the backing plate and the ring and the gradual increasing deformation of the ring results in an increasing elastic reaction of the striker 17. In other words the elastically compliant striker has a variable elastic property, and in particular an elastic property variable from a minimum to a maximum as the braking action increases. With a further increase of the braking force, the ring 30 is moved by the pad 9 so that its rigid inside stop surface 20 meets the outside surface 25 of the bush 31 which is firmly fixed to the caliper half 5. By varying the angle of the bush 31 about the axis Y-Y of the bearing surface, the amplitude of the elastic deformation travel of the ring 30 can be adjusted. By having the axis of the ring 30 coincide with the axis Y-Y of the screw and therefore of the bearing surface 15, it is possible to keep the position of contact between the pad 9 and the ring 30 unaltered even after changing the angular setting of the bush 31.

The main advantage of the disc brake is that, unusually, the presence of the bearing surface comprising the elastically compliant striker renders the brake silent during braking.

Another advantage of the disc brake according to the invention is based on its simple structure and low cost of manufacture. The bearing surface of the invention can also easily be produced and because of the provision of the angular adjustability of the bush it can easily be calibrated to suit brakes of different vehicles.

The desired elastic characteristic can be obtained by an appropriate choice of thickness of the ring 30, which also means that the elastically compliant striker can be adapted to different types of disc brake in order to achieve complete elimination of vibrations and squealing during braking.

It is an advantage of the disc brake of the invention that it completely prevents impurities such as earth, sand and metal detritus from being crushed and trapped between the pad and the bearing surface, because of the linear contact between the flat surface S of the backing plate and the generatrix G of the cylindrical ring.

Not the least advantage of the disc brake of the invention is that it lends itself to being produced with the aid of automatic assembly devices such as manipulators or robots and the like, as each bearing surface can be screwed into its respective caliper half before the two caliper halves are joined together.

It will be clear that variants and/or additions can be made to what has been described above and illustrated.

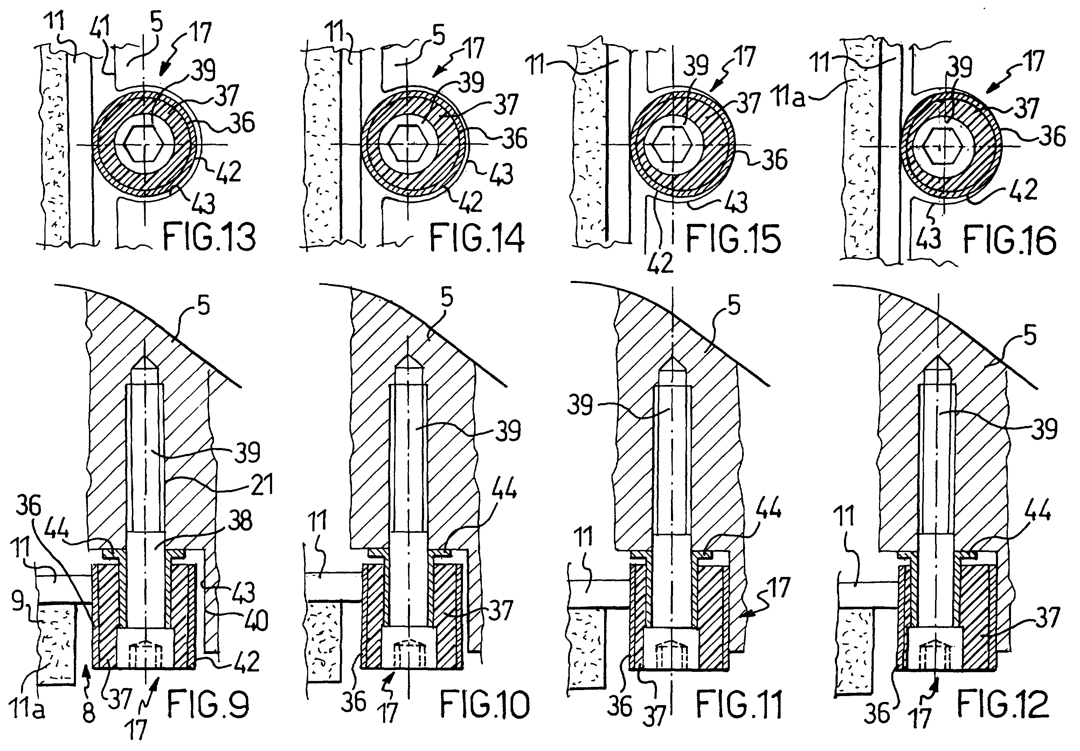

The elastically compliant striker 17 advantageously includes a metal cylindrical ring 36 fitted onto a ring or sleeve 37 of synthetic material resistant to the temperature of the disc brake when the brake is applied. The sleeve 37 in turn is fitted onto a pin fixed to the caliper 4 half 5. The metal ring 36 has a thickness especially defined to obtain a desired elastic deformation during the pushing of the backing plate 11 caused by the retarding force (Figures 9 to 16).

For an additional advantage, the said pin consists of a portion 38 of a screw 39 for the fixing of the elastically compliant striker 17.

The sleeve 37 of synthetic material is preferably moulded around a cylindrical insert 44 comprising a stop ring held against the caliper 4 half 5 of the screw 39. In this way the ring 36, the sleeve 37 and the cylindrical insert 44, being held together, form an assembly which can be made separately from the disc brake and can be fitted extremely quickly to the latter.

The assembly made up of the ring 36, sleeve 37 and cylindrical insert 44 is housed in a seat 40 let into the wall 41 which defines the seat 8 for the pad 9. This seat 40 is arcuate and shaped to the cylindrical ring. The internal dimensions of the seat 40 and in particular the diameter of the seat 40 are appropriate to provide a defined distance between the outside surface 42 of the ring 36 and the surface 43 of the cylindrical seat 40.

During braking, the backing plate of the pad pushed by the disc presses with its flat lateral surface against an external generatrix of the cylindrical ring. As the retarding force rises, the sleeve of synthetic material retreats elastically until the outside surface of the ring is stopped by the surface of the seat of the caliper half. Once the ring 36 is against the seat 43 and then acted upon by a still-increasing retarding force, it deforms elastically, so that the surface area 42 in contact with the surface 43 of the seat increases to the point where the maximum braking action is counterbalanced.

In another embodiment of the invention, the said screw has a collar 45. Specifically, the collar 45 acts as an axial stop situated at a predetermined distance from the free end of the screw 39 (Figure 17).

The sleeve 37 of synthetic material is advantageously moulded around the cylindrical portion 38 of the screw 39, and the ring 36 fits onto this assembly.

It will be obvious that in order to satisfy specific and particular requirements, a person skilled in the art will be able to make numerous modifications and alterations to the disc brake assembly described above, always remaining within the scope of protection of the invention as defined in the following claims.

## Claims

1. Disc brake (1) of the type that comprises a caliper (4) straddling a disc (2) of defined axis (X-X), seats (8) in the caliper (4), at least one pad (9, 10) for each seat (8) and having a backing plate (11, 12) for a friction lining (11a, 12a), this pad being mounted in the seat (8), and a bearing surface (15, 16, 22, 23, 28, 29) in the caliper (4) to retain the pad (9, 10) tangentially relative to the disc (2) during braking, the brake being characterized in that the bearing surface (15, 16, 22, 23, 28, 29) comprises an elastically compliant striker (17).

2. Disc brake (1) according to Claim 1, characterized in that the said elastically compliant striker (17) has a variable elastic property.

3. Disc brake (1) according to Claim 2, characterized in that the said elastic property is variable from a minimum to a maximum as the braking action increases.

4. Disc brake (1) according to any one of Claims 1 to 3, characterized in that it comprises a rigid stop (25, 43) formed in the caliper (4) for the elastically compliant striker (17).

5. Disc brake (1) according to Claim 4, characterized in that the elastically compliant striker (17) is elastically deformable.

6. Disc brake (1) according to Claim 5, characterized in that the elastically compliant striker (17) comprises an elastic bumper fixed to the caliper (4).

7. Disc brake (1) according to Claim 6, characterized in that the said elastic bumper is a metal ring (30).

8. Disc brake (1) according to Claim 7, characterized in that the metal ring (30) bumper is fixed to and projects from a steel bush (31).

9. Disc brake (1) according to Claim 8, characterized in that the said bush (31) is fixed to the caliper (4) eccentrically by a pin (24).

10. Disc brake (1) according to Claim 9, characterized in that the eccentric steel bush (31) can be set at different angles about the axis (Y-Y) of the pin (24).

11. Disc brake (1) according to Claim 5, characterized in that the elastically compliant striker (17) comprises a metal ring (36) fitted onto a sleeve (37) of synthetic material, which in turn is fitted onto a pin (38) fixed to the caliper (4).

12. Disc brake (1) according to Claim 11, characterized in that the metal ring (36) is cylindrical.

13. Disc brake (1) according to Claim 12, characterized in that the stop is an arcuate wall (43) of the caliper (4) shaped to the cylindrical ring (36).

14. Disc brake (1) according to Claim 13, characterized in that the metal ring (36) has a defined thickness so as to be elastically deformable.

15. Disc brake (1) according to any one of the preceding claims, characterized in that it comprises a screw (27, 39) for the fixing of the elastically compliant striker (17), a portion of the said screw (24, 38) constituting the said pin (24, 38).

16. Disc brake (1) according to Claim 15, characterized in that the sleeve (37) of synthetic material is moulded around an insert (44) which is fitted onto and retained by a screw to the caliper (4).

17. Disc brake (1) according to Claim 15, characterized in that the screw (39) has a collar (45) and in that the sleeve (37) of synthetic material is moulded around the screw (39).

18. Disc brake (1) according to Claim 17, characterized in that the collar (45) acts as an axial stop situated at a predetermined distance from the free end of the screw (39).
